# EUROPEAN PATENT SPECIFICATION

(11) **EP 2 965 861 B1**
(45) Date of publication and mention of the grant of the patent: **14.02.2018**
(21) Application number: 14176423.3
(22) Date of filing: 09.07.2014
(51) Int. Cl.: B23Q 3/155, B23Q 3/157

(54) **Servo-driven tool unclamping system for a machine tool**
Servobetriebenes Werkzeugausspannungssystem für eine Werkzeugmaschine
Système de desserrage d'outil à servocommande pour une machine-outil

(43) Date of publication of application: 13.01.2016
(73) Proprietor: Innoserv Fa Inc., Tortola (VG)
(72) Inventor: Chiu, Yu-Chuan, Taichung City (TW); Lai, Chih-Lung, Taichung City (TW)
(74) Representative: Lang, Christian

(56) References cited:
- EP-A1- 1 754 565
- DE-A1- 4 320 019
- US-A- 4 778 313
- US-A1- 2007 290 459

## Description

### BACKGROUND OF THE INVENTION

### 1. Technical Field

The present invention relates to a tool unclamping system for a machine tool, and more particularly to a servo-driven tool unclamping system for the machine tool which numerically controls a tool change arm to operate and controls a spindle to clamp and unclamp tools in different operating tracks.

### 2. Description of Related Art

A conventional machine tool contains an ATC system with a cam box, the cam box has two roller gear cams for driving a driven roller set to actuate a rotation of a tool change arm, and the two roller gear cams drive a connecting rod assembly to move the tool change arm upwardly and downwardly, wherein when the tool change arm rotates below a spindle, a tool on the spindle is unclamped or clamped after a sensor detects a position of the tool change arm. After confirming the tool change arm is positioned, the sensor transmits a signal to start a hydraulic cylinder or a pneumatic cylinder on the spindle so that a drive post of a tool unlock mechanism is driven by the hydraulic cylinder or the pneumatic cylinder to actuate the spindle, such that the spindle unclamps the tool and the tool change arm changes the tool.

However, a tool unclamping and clamping of the spindle and a vertical movement of the tool change arm cannot be realized simultaneously, because when the sensor confirms the signal, the tool changing operation pauses several times to prolong tool change time and working time. In addition, the tool change arm and the tool unlock mechanism of the spindle are driven by a mechanical structure or a hydraulic structure, so before changing the tool, a worker has to adjust the machine tool manually, thus causing operational inconvenience. Also, a connecting structure between the tool change arm and the tool unlock mechanism of the spindle is complicated and has a large size, thus occupying canfiguration space and increasing maintenance difficult.

Furthermore, when a cylinder of the tool unlock mechanism is in a tool unclamp stroke, a distance between the drive post and a pull stud is adjusted by using a washer, thereby complicating the tool unlock mechanism.

From the US application US 4 778 313 A a conventional servo-driven tool unclamping system is known, comprising a tool changing unit, a tool unclamp unit including a spindle, and a transmission assembly, wherein the tool unclamp unit further includes a servo motor for driving the transmission assembly to actuate the spindle to unclamp and clamp each tool, and a servo control unit including a servo drive that is electrically coupled with a servo motor and numerically controls the tool unclamp unit by using a program,

Furthermore, from the document EP 1 754 565 A1 a tool changing unit is known that can be configured for automatically changing tools, including a tool carrier for carrying and retaining at least two tools and a drive tor moving the tool carrier to the inside and the outside of a working space.

The present invention has arisen to mitigate and/or obviate the afore-described disadvantages.

### SUMMARY OF THE INVENTION

The primary object of the present invention is to provide a servo-driven tool unclamping system for a machine tool which numerically controls a tool change arm to operate and controls a spindle to clamp and unclamp tools in different operating tracks, such that a tool changing unit and a tool unclamp unit operate synchronously to execute tool unclamping operation of the machine tool quickly and to enhance production efficiency.

Another object of the present invention is to provide a servo-driven tool unclamping system for a machine tool in which a servo motor directly drives a transmission assembly so that a biasing member of the transmission assembly actuates a pushing stem, and then the pushing stem moves linearly between a pulling position and a unclamping position, hence the tool unclamp unit is simplified, has a small size, and operates precisely and quickly.

To obtain the above objectives, a servo-driven tool unclamping system as defined in appended claim 1 is provided.

### BRIEF DESCRIPTION OF THE DRAWINGS

Figure 1 is a block diagram of a servo-driven tool unclamping system for a machine tool according to a preferred embodiment of the present invention.
Figure 2 is a side plan view showing the assembly of the servo-driven tool unclamping system for the machine tool according to the preferred embodiment of the present invention.
Figure 3 is a cross sectional view showing a transmission assembly of a tool unclamp unit and a driving assembly being connected with a tool unlock mechanism of a spindle, wherein the tool unclamp unit is located at a starting position.
Figure 4 is a perspective view showing the assembly of the servo-driven tool unclamping system for the machine tool according to the preferred embodiment of the present invention.

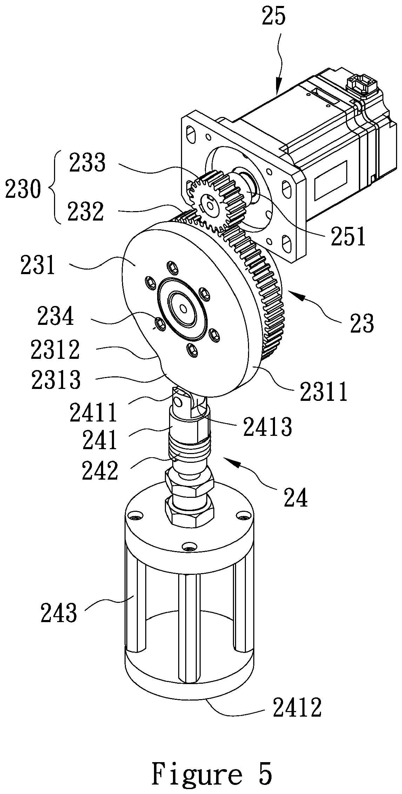

Figure 5 is another perspective view showing the assembly of the servo-driven tool unclamping system for the machine tool according to the preferred embodiment of the present invention.
Figure 6 is a cross sectional view showing a corresponding relationship between a biasing member and a driving assembly, when the tool unclamp unit unclamps a tool.
Figure 7 is a cross sectional view showing the tool unclamp unit finishes tool unclamping operation.
Figure 8 is a sequence diagram showing after the spindle unclamps the tool, a tool change arm clamps the tool, wherein part (8a) is a curve diagram illustrating a rotating operation of the tool change arm, part (8b) is a curve diagram illustrating a vertical moving operation of a driving shaft of the tool change arm, and part (8c) is a curve diagram illustrating tool unclamping and clamping operations of the tool unclamp unit.
Figure 9 is a perspective view showing the operation of the tool change arm, wherein part (9a) illustrates the tool change arm is in an original state, part (9b) illustrates the tool change arm rotates 65 degrees counterclockwise, part (9c) illustrates the tool change arm moves 114mm downwardly, part (9d) illustrates the tool change arm rotates 180 degrees counterclockwise, part (9e) illustrates the tool change arm moves 114 mm upwardly, and part (9f) illustrates the tool change arm rotates 65 degrees clockwise.
Figure 10 is a sequence diagram showing after the tool change arm clamps the tool, the spindle unclamps the tool, wherein part (10a) is a curve diagram illustrating the rotating operation of the tool change arm, part (10b) is a curve diagram illustrating the vertical moving operation of the driving shaft of the tool change arm, and part (10c) is a curve diagram illustrating the tool unclamping and clamping operations of the tool unclamp unit.

### DETAILED DESCRIPTION OF THE PREFERRED EMBODIMENTS

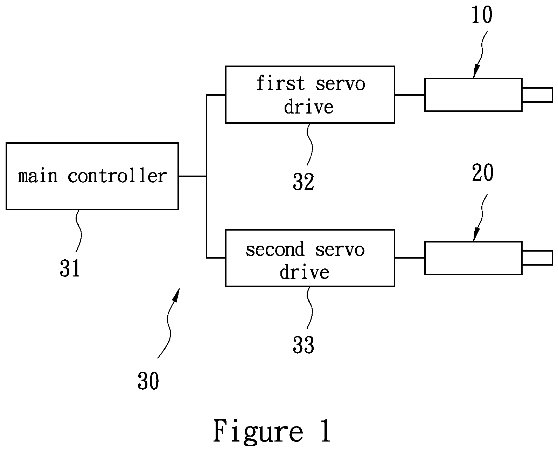

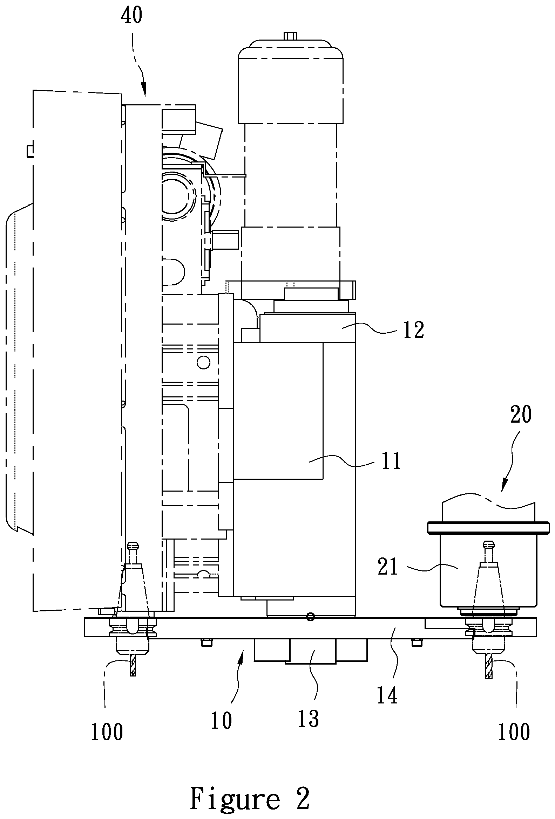

With reference to Figures 1 and 2, a servo-driven tool unclamping system for a machine tool according to a preferred embodiment of the present invention is employed to operate two tools 100 and comprises: a tool changing unit 10, a tool unclamp unit 20, and a servo control unit 30.

The tool changing unit 10 includes a cam box 11, a first servo motor 12 for driving the cam box 11, a driving shaft 13 driven by the cam box 11, and a tool change arm 14 driven by the driving shaft 13 to rotate. The first servo motor 12 drives the cam box 11 and the driving shaft 13 sequentially to control the tool change arm 14 to change the two tools 100. In use, the tool changing unit 10 is mounted on one side of a tool magazine unit 40 (as shown in Figure 2).

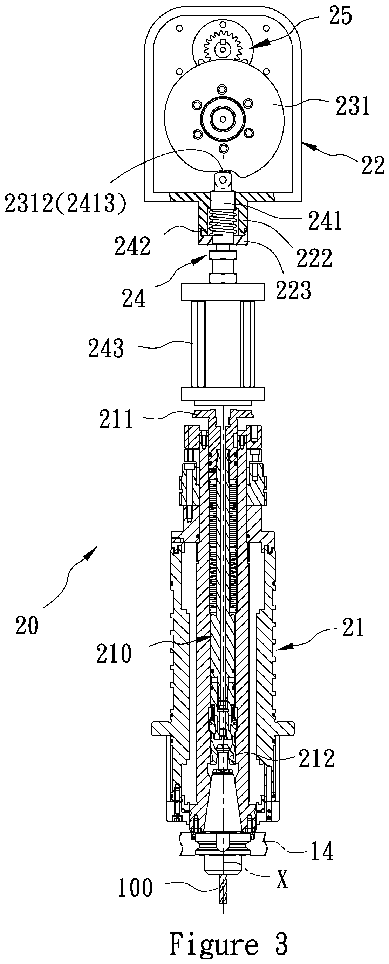

Referring further to Figure 3, the tool unclamp unit 20 includes a spindle 21, a casing 22, a transmission assembly 23, a driving assembly 24, and a second servo motor 25, wherein the second servo motor 25 drives the transmission assembly 23 to actuate the spindle 21 to unclamp and clamp each tool 100.

The servo control unit 30 includes a main controller 31, a first servo drive 32 and a second servo drive 33 both electrically connected with and controlled by the main controller 31, wherein the first servo drive 32 and the second servo drive 33 are also electrically coupled with the first servo motor 12 and the second servo motor 25 and numerically control the tool changing unit 10 and the tool unclamp unit 20 by using a program, such that the tool change arm 14 of the tool changing unit 10 operates, and the spindle 21 of the tool unclamp unit 20 clamps and unclamps each tool 100 in different operating tracks.

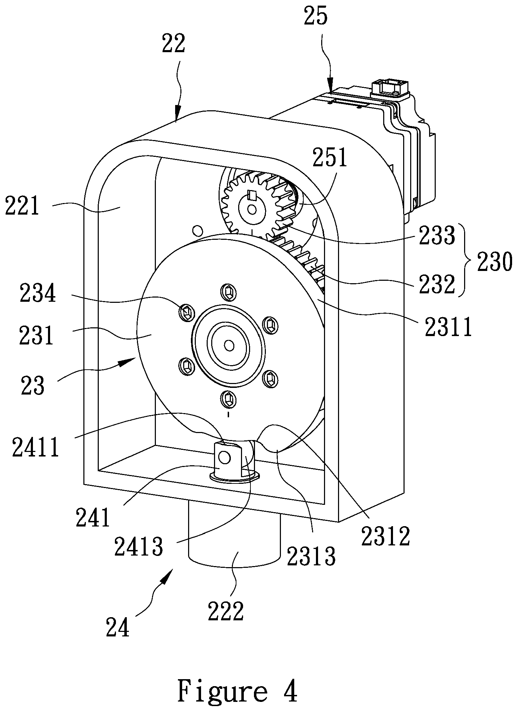

As shown in Figures 3 to 4, the spindle 21 of the tool unclamp unit 20 has a tool unlock mechanism 210, a pull stud 211, and a clamping jaw 212. Since the tool unlock mechanism 210 is a well-known art, further remarks are omitted.

The first servo motor 25 has a drive shaft 251.

The casing 22 has an accommodating space 221. In this embodiment, the casing 22 has a protective cover (not shown) for covering the accommodating space 221.

The transmission assembly 23 is accommodated in the accommodating space 221. The transmission assembly 23 includes a gear set 230 coupling with the drive shaft 251 of the second servo motor 25 and a biasing member 231 synchronously operating with the gear set 230, wherein the biasing member 231 has a noncircular face 2311 defined around a peripheral side thereof. The gear set 230 has a first gear 232 rotatably disposed in the casing 22 and a second gear 233 meshing with the first gear 232 and pivoted on the drive shaft 251 of the second servo motor 25 to form a gear deceleration system, wherein the biasing member 231 is coaxial with the first gear 232. In this embodiment, the biasing member 231 is a plate cam and is in connection with the first gear 232 by ways of plural screwing elements 234. The biasing member 231 has a concaved section 2312 arranged on the noncircular face 2311 and a convex section 2313 proximate to one side of the concaved section 2312.

The driving assembly 24 is secured on an upper end of the spindle 21 and includes a pushing stem 241 sliding along an X axis of the spindle 21, a resilient element 242 fitted on the pushing stem 241, and an abutting holder 243 mounted on a bottom end of the pushing stem 241. The resilient element 242 is any one of a compression spring, a Belleville washer, and an elastic rubber (In this embodiment, the resilient element 242 is the compression spring). The pushing stem 241 has a top edge 2411 corresponding to the noncircular face 2311 of the biasing member 231, a bottom edge 2412 corresponding to the pull stud 211 of the spindle 21, and a rolling element 2413 rotatably fixed on the top edge 2411, wherein the resilient element 242 is biased against the biasing member 231. The pushing stem 241 linearly contacts with the biasing member 231 by means of the rolling element 2413 to reduce friction between the biasing member 231 and the pushing stem 241. The driving assembly 24 is secured in a receiving tube 222 on a bottom end of the casing 22, wherein the receiving tube 222 has a lid 223 disposed on a bottom end thereof to avoid the resilient element 242 falling out of the receiving tube 222.

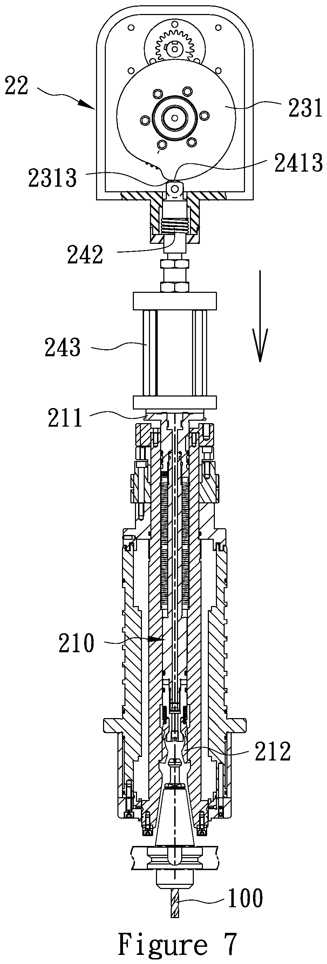

When the second servo motor 25 drives the transmission assembly 23, the biasing member 231 is synchronously driven by the second servo motor 25 to actuate the pushing stem 241, and then the pushing stem 241 moves reciprocately to drive the pull stud 211 to move linearly between a pulling position (as shown in Figure 3) and a unclamping position (as illustrated in Figure 7), hence the tool unclamp unit 20 clamps and unclamps the two tools 100. By explaining a rotating position of the biasing member 231 as follows, a corresponding relationship between the tool unclamp unit 20 and the tool unlock mechanism 210 is well understood.

With reference to Figure 3, the second servo motor 25 does not operate in a normal state, and a predetermined distance is maintained between the driving assembly 24 and the tool unlock mechanism 210, i.e., the abutting holder 243 does not contact the pull stud 211, a tool 100 on the spindle 21 is clamped by the clamping jaw 212, and the concaved section 2312 of the biasing member 231 abuts against the rolling element 2413 of the pushing stem 241, the resilient element 242 expands outwardly.

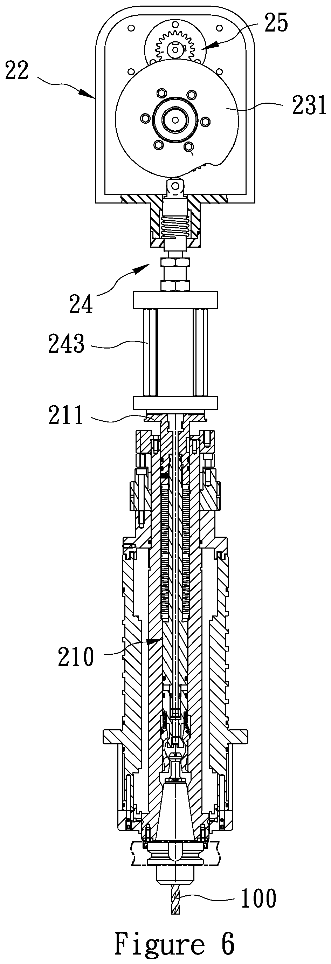

Referring to Figure 6, when the second servo drive 33 of Figure 1 drives the tool unclamp unit 20 to operate, the second servo motor 25 drives the transmission assembly 23, and then the biasing member 231 of the transmission assembly 23 rotates counterclockwise, the abutting holder 243 of the driving assembly 24 is merely biased against a top end of the pull stud 211, and the tool 100 on the spindle 21 is still clamped by the clamping jaw 212 of the tool unlock mechanism 210.

As illustrated in Figure 7, when a rotating angle of the biasing member 231 increases gradually, the biasing member 231 of the transmission assembly 23 rotates counterclockwise, and the convex section 2313 of the biasing member 231 contacts the rolling element 2413 so that the abutting holder 243 presses the tool unlock mechanism 210 downwardly, and the pull stud 211 drives the clamping jaw 212 to unclamp the tool 100, in the meantime, the resilient element 242 is pressed to be at a shortest length.

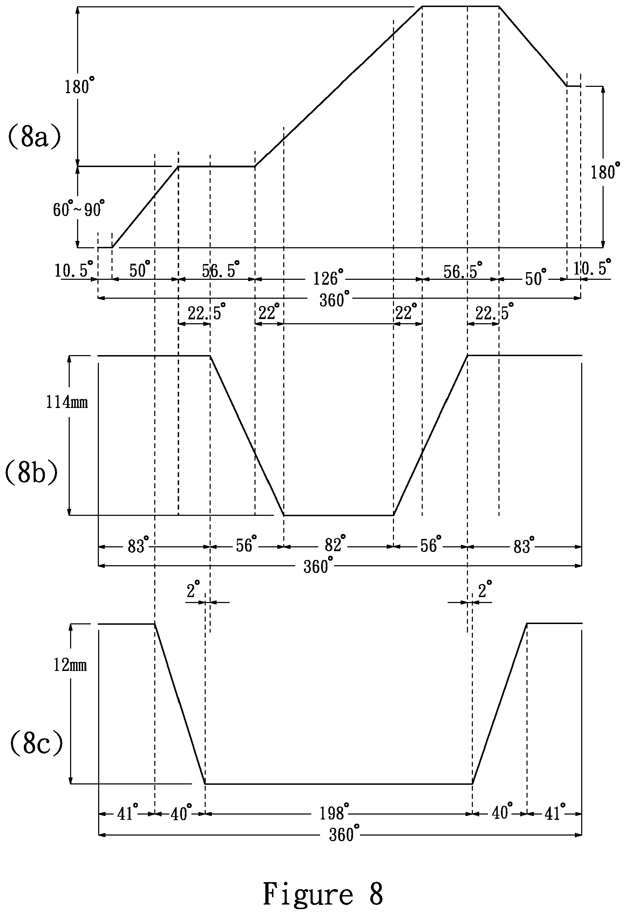

As shown in Figure 8, an angle at a horizontal coordinate represents an angle of a rotating cycle time of the motor, and a vertical coordinate denotes a rotating angle 8a, a vertical moving distance 8b, and an unclamping distance 8c of the tool change arm 14.

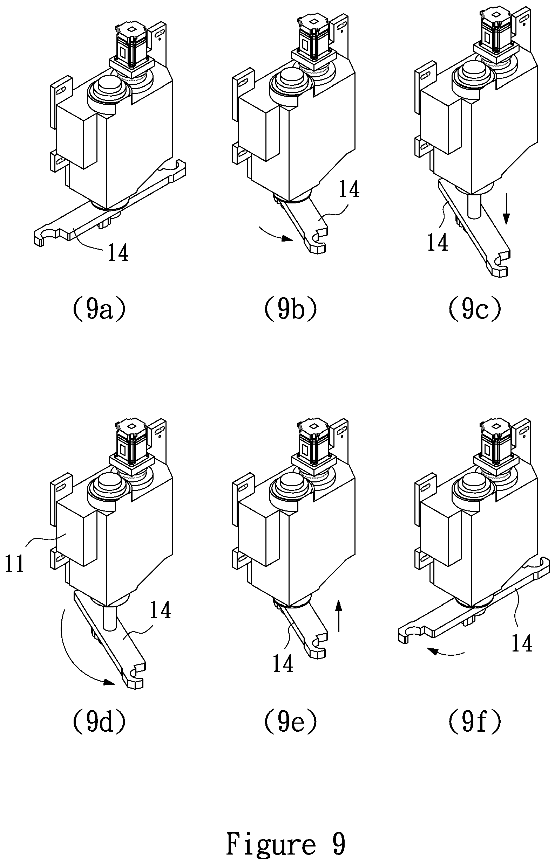

A synchronous tool unclamping of the servo-driven tool unclamping system in a first operation mode means the tool change arm 14 re-clamps the tool, after the spindle 21 releases the tool. For example, as shown in Figures 1, 2, 8 and 9, the main controller 31 of the servo control unit 30 controls the first servo drive 32 to start the first servo motor 12, and then the tool change arm 14 is driven by the first servo motor 12 to rotate counterclockwise as shown in (9a) to (9c) of Figure 9, before the tool change arm 14 rotates toward the tool 100 on the spindle 21, the second servo drive 33 starts the second servo motor 25 to drive the tool unclamp unit 20, and then the spindle 21 of the tool unclamp unit 20 unclamps the tool 100 as illustrated in 8(c) of Figure 8, wherein when the rotating cycle time of the motor is at 41 degrees, the tool 100 on the spindle 21 is unclamped and removed, and when the tool change arm 14 rotates toward the tool 100 on the spindle 21 and the tool unclamp unit 20 removes the tool 100, the tool change arm 14 locks the tool 100 (as shown in Figure 2, and the rotating cycle time is at 60.5 degrees). Referring further to (8b) of FIG. 8 and (9c) of Figure 9, the cam box 11 drives the tool change arm 14 to move 114mm downwardly (the rotating cycle time is at 83 degrees) toward a downward starting point (as illustrated in (9d) of Figure 9; and the rotating cycle time is at 139 degrees), then as shown in (9d) of Figure 9 and (8a) of Figure 8, the tool change arm 14 further rotates 180 degrees counterclockwise and upwardly moves 114mm to return back to an upward starting point (as illustrated in Figure (9e); and the rotating cycle time is at 277 degrees), thus finishing tool unclamping operation. After the tool change arm 14 releases the tool 100 (a distance of unclamping the tool 100 is 12mm) and rotates 65 degrees (as shown in (9f) of Figure 9) clockwise, the tool 100 is clamped and unclamped by the tool change arm 14 and the spindle 21 synchronously.

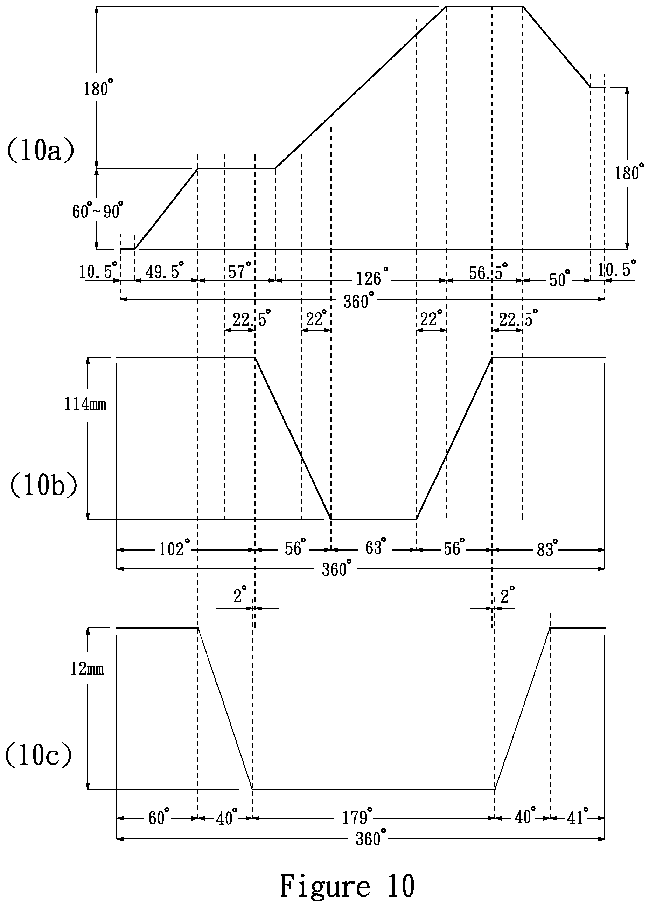

With reference to Figure 10, an angle at a horizontal coordinate represents an angle of a rotating cycle time of the motor, and a vertical coordinate denotes a rotating angle 10a, a vertical moving distance 10b, and an unclamping distance 10c of the tool change arm 14.

A synchronous tool unclamping of the servo-driven tool unclamping system in a second operation mode means the spindle 21 releases the tool, after the tool change arm 14 re-clamps the tool. For instance, as shown in Figures 1, 2, 9 and 10, the main controller 31 of the servo control unit 30 controls the first servo drive 32 to start the first servo motor 12, and then the tool change arm 14 is driven by the first servo motor 12 to rotate counterclockwise as shown in (9a) to (9b) of Figure 9, wherein when the tool change arm 14 rotates toward the tool 100 on the spindle 21 and clamps the tool 100 (as illustrated in Figure 2), the second servo drive 33 simultaneously starts the second servo motor 25 to drive the tool unclamp unit 20, and then the spindle 21 of the tool unclamp unit 20 unclamps and removes the tool 100 as illustrated in 10(c) of Figure 10. After the tool 100 is removed (the rotating cycle time is at 100 degrees). Referring further to (10b) of Figure 10 and (9c) of Figure 9, the cam box 11 drives the tool change arm 14 to move 114mm downwardly (the rotating cycle time is at 102 degrees) toward the downward starting point (as illustrated in (9d) of Figure 9; and the rotating cycle time is at 158 degrees), then as shown in (9d) of Figure 9 and (10a) of Figure 10, the tool change arm 14 further rotates 180 degrees counterclockwise and upwardly moves 114mm to return back to the upward starting point (as illustrated in Figure (9e); and the rotating cycle time is at 277 degrees), thus finishing the tool unclamping operation. After the tool change arm 14 releases the tool 100 (the distance of unclamping the tool 100 is 12mm) and rotates 65 degrees (as shown in (9f) of Figure 9) clockwise, the tool 100 is clamped and released by the tool change arm 14 and the spindle 21 synchronously.

As illustrated in (8b) and (8c) of Figure 8, (10b) and (10c) of Figure 10, and (9e) and (9e) of Figure 9, before the tool change arm 14 moves 114mm downwardly and after the tool change arm 14 moves 114mm upwardly, 2 degrees of tool unclamping distances (i.e., a time difference, the rotating cycle time) occur. For example, before moving upwardly, the tool change arm 14 locks the tool 100 on the spindle 21, and after moving downwardly, the tool change arm 14 releases the tool 100 to prevent the tool hitting the machine tool.

As shown in Figure 9, when the tool change arm 14 clamps and unclamps the tool, its rotating angle is 64 degrees. Preferably, the rotating angle of the tool change arm 14 is set within 60 to 90 degrees.

Accordingly, the servo-driven tool unclamping system of the present invention has following advantages:
1. Due to the tool changing unit 10 and the tool unclamp unit 20 are controlled by the first servo drive 32 and the second servo drive 33, both of which are controlled by the main controller 31, the tool change arm 14 and the spindle 21 are numerically controlled to clamp and unclamp the tool synchronously.
2. When the tool change arm 14 operates and the spindle 21 clamps and unclamps the tool, the spindle 21 unclamps the tool firstly and then the tool change arm 14 clamps the tool or the tool change arm 14 clamps the tool firstly and then the spindle 21 unclamps the tool based on a changeable operating sequence, hence the tool change arm 14 and the spindle 21 clamp and unclamp the tool synchronously.
3. The sensor detects a position of the tool change arm in a conventional tool changing operation, so several pauses occur to prolong working time. However, the tool change arm 14 and the spindle 21 of the present invention are numerically controlled to clamp and unclamp the tool synchronously and successively by using the program, thus accelerating working time and enhancing production efficiency.
4. The second servo motor 25 directly drives the transmission assembly 23 so that the biasing member 231 of the transmission assembly 23 actuates the pushing stem 241, and then the pushing stem 241 moves linearly between the pulling position and the unclamping position, the tool unclamp unit 20 clamps and unclamps the tool 100 on the spindle 21 quickly. Thereby, the servo-driven tool unclamping system is simplified, has a small size, and operates precisely and quickly.
5. The biasing member 231 is removed from the transmission assembly 23, for instance, the protective cover (not shown) of the casing 22 is opened, and the plural screwing elements 234 are unscrewed, the biasing member 231 of various operating tracks is therefore replaced to change a tool unclamping travel of the pushing stem 241. Accordingly, the tool unclamp unit 20 is capable of adjusting the tool unclamping travel of the driving assembly 24 and is applicable for tool unlock mechanisms of various brands.

## Claims

1. A servo-driven tool unclamping system for a machine tool being employed to operate two tools (100) and comprising:
a tool changing unit (10) including a cam box (11), a driving shaft (13) driven by the cam box (11), and a tool change arm (14) driven by the driving shaft (13) to rotate;
a tool unclamp unit (20) including a spindle (21), and a transmission assembly (23); wherein the tool changing unit (10) further includes a first servo motor (12) for driving the cam box (11), the first servo motor (12) being adapted to drive the cam box (11) and the driving shaft (13) sequentially to control the tool change arm (14) to change two tools (100);
the tool unclamping unit (20) further including a second servo motor (25), the second servo motor (25) being adapted to drive the transmission assembly (23) to actuate the spindle (21) to unclamp and clamp each tool (100); and
a servo control unit (30) including a main controller (31), a first servo drive (32) and a second servo drive (33) both electrically connected with and controlled by the main controller (31), wherein the first servo drive (32) is electrically coupled with the first servo motor (12) and numerically controls the tool changing unit (10) by using a program, and the second servo drive (33) is electrically coupled with the second servo motor (25) and numerically controls the tool unclamp unit (20) by using a program, such that the tool change arm (14) can operate and the spindle (21) can clamp and unclamp each tool (100) in different operating tracks.

2. The servo-driven tool unclamping system for the machine tool as claimed in claim 1, wherein the second servo motor (25) has a drive shaft (251); the tool unclamp unit (20) also includes a casing (22) for accommodating the transmission assembly (23) and a driving assembly (24), and the transmission assembly (23) includes a gear set (230) coupling with the drive shaft (251) of the second servo motor (25) and a biasing member (231) synchronously operating with the gear set (230), wherein the biasing member (231) has a noncircular face (2311) defined around a peripheral side thereof; the driving assembly (24) is secured on an upper end of the spindle (21) and includes a pushing stem (241) sliding along the spindle (21) and a resilient element (242) fitted on the pushing stem (241), the pushing stem (241) has a top edge (2411) corresponding to the noncircular face (2311) of the biasing member (231) and a bottom edge (2412) corresponding to the pull stud (211) of the spindle (21), and the resilient element (242) is biased against the biasing member (231).

3. The servo-driven tool unclamping system for the machine tool as claimed in claim 2, wherein the gear set (230) has a first gear (232) rotatably disposed in the casing (22) and a second gear (233) meshing with the first gear (232) and pivoted on the drive shaft (251) of the second servo motor (25) to form a gear deceleration system, wherein the biasing member (231) is coaxial with the first gear (232) and is in connection with the first gear.

4. The servo-driven tool unclamping system for the machine tool as claimed in claim 2, wherein the biasing member (231) of the transmission assembly (23) has a concaved section (2312) arranged on the noncircular face (2311) and a convex section (2313) proximate to one side of the concaved section (2312).

5. The servo-driven tool unclamping system for the machine tool as claimed in claim 2, wherein the driving assembly (24) further includes an abutting holder (243) mounted on a bottom end of the pushing stem (241) to abut against the pull stud (211).

6. The servo-driven tool unclamping system for the machine tool as claimed in claim 2, wherein driving assembly (24) further includes a rolling element (2413) rotatably fixed on the top edge thereof, and the pushing stem (241) linearly contacts with the biasing member (231) by means of the rolling element (2413).

7. The servo-driven tool unclamping system for the machine tool as claimed in claim 2, wherein the driving assembly (24) further includes a receiving tube (222) fixed on a bottom end of the casing (22) and a lid (223) disposed on a bottom end of the receiving tube (222), wherein the pushing stem (241) and the resilient element (242) are mounted in the receiving tube (222).

## Patentansprüche

1. Servogetriebenes Werkzeugabspannsystem für ein Maschinenwerkzeug, das ausgestaltet ist, zwei Werkzeuge (100) zu betreiben, umfassend:
eine Werkzeugaustauscheinheit (10), die eine Nockenbox (11), eine durch die Nockenbox (11) angetriebene Antriebswelle (13) und einen durch die Antriebswelle zur Rotation angetriebenen Werkzeugaustauscharm (14) beinhaltet, und
eine Werkzeugabspanneinheit (20), die eine Spindel (21) und eine Übertragungsanordnung (23) umfasst,
wobei
die Werkzeugaustauscheinheit (10) ferner einen ersten Servomotor (12) für den Antrieb der Nockenbox (11) aufweist, wobei der erste Servomotor (12) ausgestaltet ist, die Nockenbox (11) und die Antriebswelle (11) sequenziell anzutreiben, um den Werkzeugaustauscharm (14) zum Austauschen von zwei Werkzeugen (100) zu steuern,
die Werkzeugabspanneinheit (20) ferner einen zweiten Servomotor (25) umfasst, wobei der zweite Servomotor ausgestaltet ist, die Übertragungsanordnung (23) anzutreiben, die Spindel (21) zu betätigen, jedes Werkzeug zu lösen und zu klemmen, und
eine Servosteuereinheit (30), die einen Hauptkontroller (31), einen ersten Servoantrieb (32) und einen zweiten Servoantrieb (33) umfasst, die beide mit dem Hauptkontroller (31) elektrisch verbunden sind und durch diesen gesteuert werden, wobei der erste Servoantrieb (32) elektrisch mit dem ersten Servomotor (12) verbunden ist und numerisch die Werkzeugaustauscheinheit (10) durch Verwendung eines Programms steuert, und wobei der zweite Servoantrieb (33) elektrisch mit dem zweiten Servomotor (25) verbunden ist und numerisch die Werkzeugaustauscheinheit (10) durch Verwendung eines Programms steuert, sodass der Werkzeugaustauscharm (14) betrieben werden kann und die Spindel (21) jedes Werkzeug (100) in verschiedenen Betriebsphasen klemmen und lösen kann.

2. Servogetriebenes Werkzeugabspannsystem für das Maschinenwerkzeug nach Anspruch 1, wobei der zweite Servomotor (25) eine Antriebswelle (251) aufweist, wobei die Werkzeugabspanneinheit (20) ferner ein Gehäuse (22) zur Aufnahme der Übertragungsanordnung (23) und einer Antriebsanordnung (24) aufweist, und wobei die Übertragungsanordnung (23) einen Zahnradsatz (230), der mit der Antriebswelle (251) des zweiten Servomotors (25) koppelt, und ein Vorspannelement (231) umfasst, das synchron mit dem Zahnradsatz (230) arbeitet, wobei das Varspannelement (231) eine nichtkreisrunde Fläche (2311) aufweist, die um eine Umfangsseite derselben definiert ist, wobei die Antriebsanordnung (24) an einem oberen Ende der Spindel (21) befestigt ist und einen Schubschaft (241), der entlang der Spindel (21) gleitet, und ein elastisches Element (242) umfasst, das auf den Schubschaft (241) angepasst ist, wobei der Schubschaft (241) einen oberen Rand (2411), der der nichtkreisrunden Fläche (2311) des Vorspannelements (231) entspricht, und einen unteren Rand (2412) aufweist, der dem Zugstutzen (211) der Spindel (21) entspricht, und wobei das elastische Element (242) gegen das Vorspannelement (231) vorgespannt ist.

3. Servogetriebenes Werkzeugabspannsystem für das Maschinenwerkzeug nach Anspruch 2, wobei der Zahnradsatz (230) ein erstes Zahnrad (232), das rotierbar in dem Gehäuse (22) angeordnet ist, und ein zweites Zahnrad (233) aufweist, das mit dem ersten Zahnrad (232) verzahnt und an der Antriebswelle (251) des zweiten Servomotors (25) drehbar gelagert ist, um ein Zahnradabbremssystem zu bilden, und wobei das Vorspannelement (231) koaxial zum ersten Zahnrad (232) und in Verbindung mit dem ersten Zahnrad ist.

4. Servogetriebenes Werkzeugabspannsystem für das Maschinenwerkzeug nach Anspruch 2, wobei das Vorspannelement (231) der Übertragungsanordnung (23) einen konkaven Bereich (2312), der an der nichtkreisrunden Fläche (2311) angeordnet ist, und einen konvexen Bereich (2313) aufweist, der zu einer Seite des konkaven Bereichs (2312) benachbart angeordnet ist.

5. Servogetriebenes Werkzeugabspannsystem für das Maschinenwerkzeug nach Anspruch 2, wobei die Antriebsanordnung (24) ferner einen Anschlagshalter (243) aufweist, der an einem unteren Ende des Schubschafts (241) montiert ist, um an den Zugstutzen (211) anzuschlagen.

6. Servogetriebenes Werkzeugabspannsystem für das Maschinenwerkzeug nach Anspruch 2, wobei die Antriebseinheit (24) ferner ein Rollelement (2413) aufweist, das drehbar am oberen Rand der Antriebseinheit (24) fixiert ist, wobei der Schubschaft (241) mittels des Rollelements (2413) linear mit dem Vorspannelement (231) kontaktiert ist.

7. Servogetriebenes Werkzeugabspannsystem für das Maschinenwerkzeug nach Anspruch 2, wobei die Antriebseinheit (24) ferner eine Aufnahmeröhre (222), die an dem unteren Ende des Gehäuses (22) befestigt ist, und einen Deckel (223) aufweist, der am unteren Ende der Aufnahmeröhre (222) angeordnet ist, wobei der Schubschaft (241) und das elastische Element (242) in der Aufnahmeröhre (222) montiert sind.

## Revendications

1. Système de desserrage d'outil servo-entraîné pour une machine-outil, employé pour actionner deux outils (100) et comprenant:
un unité de changement d'outil (10) incluant une boîte à came (11), un arbre d'entraînement (13) entraîné par la boîte à came (11), et un bras de changement d'outil (14) entraîné par l'arbre d'entraînement (13) pour entrer en rotation;
une unité de desserrage d'outil (20) incluant une broche (21), et un ensemble de transmission (23);
dans lequel
l'unité de changement d'outil (10) inclut en outre un premier servomoteur (12) pour entraîner la boîte à came (11), le premier servomoteur (12) étant adapté pour entraîner la boîte à came (11) et l'arbre d'entraînement (13) séquentiellement pour commander le bras de changement d'outil (14) pour changer deux outils (100);
l'unité de desserrage d'outil (20) incluant en outre un second servomoteur (25), le second servomoteur (25) étant adapté pour entraîner l'ensemble de transmission (23) pour actionner la broche (21) pour desserrer et serrer chaque outil (100); et
une unité de servocommande (30) incluant un dispositif de commande principal (31), un premier servo-entraînement (32) et un second servo-entraînement (33), les deux électriquement connectés au dispositif de commande principal (31), et commandés par celui-ci, dans lequel le premier servo-entraînement (32) est électriquement couplé au premier servomoteur (12) et commande numériquement l'unité de changement d'outil (10) en utilisant un programme, et le second servo-entraînement (33) est électriquement couplé au second servomoteur (25) et commande numériquement l'unité de desserrage d'outil (20) en utilisant un programme, de telle sorte que le bras de changement d'outil (14) puisse fonctionner, et la broche (21) puisse serrer et desserrer chaque outil (100) dans différentes pistes de fonctionnement.

2. Système de desserrage d'outil servo-entraîné pour la machine-outil selon la revendication 1, dans lequel le second servomoteur (25) possède un arbre d'entraînement (251); l'unité de desserrage d'outil (20) inclut également un carter (22) pour loger l'ensemble de transmission (23) et un ensemble d'entraînement (24), et l'ensemble de transmission (23) inclut un train de roues dentées (230) s'accouplant avec l'arbre d'entraînement (251) du second servomoteur (25) et un élément de sollicitation (231) fonctionnant de façon synchrone avec le train de roues dentées (230), dans lequel l'élément de sollicitation (231) possède une face non circulaire (2311) définie autour d'un côté périphérique de celui-ci; l'ensemble d'entraînement (24) est fixé sur une extrémité supérieure de la broche (21) et inclut une tige de poussée (241) coulissant le long de la broche (21) et un élément résilient (242) ajusté sur la tige de poussée (241), la tige de poussée (241) possède un bord supérieur (2411) correspondant à la face non circulaire (2311) de l'élément de sollicitation (231) et un bord inférieur (2412) correspondant au goujon de tirage (211) de la broche (21), et l'élément résilient (242) est sollicité contre l'élément de sollicitation (231).

3. Système de desserrage d'outil servo-entraîné pour la machine-outil selon la revendication 2, dans lequel le train de roues dentées (230) possède une première roue dentée (232) disposée de façon rotative dans le carter (22) et une seconde roue dentée (233) s'engrenant avec la première roue dentée (232) et pivotant sur l'arbre d'entraînement (251) du second servomoteur (25) pour former un système de décélération à roues dentées, dans lequel l'élément de sollicitation (231) est coaxial avec la première roue dentée (232) et est en association avec la première roue dentée.

4. Système de desserrage d'outil servo-entraîné pour la machine-outil selon la revendication 2, dans lequel l'élément de sollicitation (231) de l'ensemble de transmission (23) possède une section concave (2312) agencée sur la face non circulaire (2311) et une section convexe (2313) à proximité d'un côté de la section concave (2312).

5. Système de desserrage d'outil servo-entraîné pour la machine-outil selon la revendication 2, dans lequel l'ensemble d'entraînement (24) inclut en outre un support d'appui (243) monté sur une extrémité inférieure de la tige de poussée (241) pour prendre appui contre le goujon de tirage (211).

6. Système de desserrage d'outil servo-entraîné pour la machine-outil selon la revendication 2, dans lequel ensemble d'entraînement (24) inclut en outre un élément roulant (2413) fixé de façon rotative sur le bord supérieur de celui-ci, et la tige de poussée (241) entre linéairement en contact avec l'élément de sollicitation (231) au moyen de l'élément roulant (2413).

7. Système de desserrage d'outil servo-entraîné pour la machine-outil selon la revendication 2, dans lequel l'ensemble d'entraînement (24) inclut en outre un tube de réception (222) fixé sur une extrémité inférieure du carter (22) et un couvercle (223) disposé sur une extrémité inférieure du tube de réception (222), dans lequel la tige de poussée (241) et l'élément résilient (242) sont montés dans le tube de réception (222).
